# EUROPEAN PATENT SPECIFICATION

(11) **EP 3 202 928 B1**
(45) Date of publication and mention of the grant of the patent: **01.11.2023**
(21) Application number: 15846479.2
(22) Date of filing: 29.09.2015
(51) Int. Cl.: C22B 7/00, C22B 3/08, C22B 3/26, C22B 23/00, C22B 26/12, C22B 47/00, C22B 3/00, H01M 10/54

(54) **LEACHING METHOD FOR LITHIUM ION BATTERY SCRAP AND METHOD FOR RECOVERING METAL FROM LITHIUM ION BATTERY SCRAP**
AUSLAUGUNGSVERFAHREN FÜR SCHROTT VON LITHIUM-IONEN-BATTERIEN UND VERFAHREN ZUR RÜCKGEWINNUNG VON METALL AUS SCHROTT VON LITHIUM-IONEN-BATTERIEN
PROCÉDÉ DE LIXIVIATION POUR DÉCHET DE BATTERIE LITHIUM-ION ET PROCÉDÉ DE RÉCUPÉRATION DE MÉTAL À PARTIR D'UN DÉCHET DE BATTERIE LITHIUM-ION

(30) Priority: 30.09.2014 JP 2014202069
(43) Date of publication of application: 09.08.2017
(60) Divisional application: 23156243.0
(73) Proprietor: JX Nippon Mining & Metals Corporation, Tokyo 105-8417 (JP)
(72) Inventor: YOKOTA, Takuya, Hitachi-shi Ibaraki 317-0056 (JP); ITO, Junichi, Tsuruga-shi Fukui 914-0027 (JP)
(74) Representative: Hooiveld, Arjen Jan Winfried
(86) International application number: PCT/JP2015/077622
(87) International publication number: WO 2016/052569

(56) References cited:
- JP-A- H07 207 349
- JP-A- 2009 193 778
- JP-A- 2012 001 750
- JP-A- 2013 112 859
- JP-A- 2013 512 345
- JP-A- 2014 162 982
- Guisheng Zeng ET AL: "Innovative Electrochemistry Technique for Leaching Cobalt from Spent Lithium Ion Batteries", Asian Journal of Chemistry, 15 February 2014 (2014-02-15), XP055469600, DOI: 10.14233/ajchem.2014.15933 Retrieved from the Internet: URL:http://www.asianjournalofchemistry.co. in/user/journal/viewarticle.aspx?ArticleID =26_5_33 [retrieved on 2018-04-23]

## Description

### TECHNICAL FIELD

The present invention relates to a method for leaching lithium ion battery scrap containing nickel and/or cobalt and a method for recovering defined metals from the lithium ion battery scrap. More particularly, it proposes a technique that can contribute to reduction of costs required for treating the lithium ion battery scrap.

### BACKGROUND ART

Lithium ion batteries used in various industrial fields including various electronic devices employ lithium metal salts containing manganese, nickel and cobalt as positive electrode materials. In recent years, there have been circumstances where quantities of the lithium ion batteries to be used have been increased and the range of use of the battery has been expanded, so that quantities of the lithium ion batteries to be discarded have been increased due to product lives of the batteries and defects in the manufacturing processes.

Under such circumstances, it would be desired to easily recover expensive elements such as nickel and cobalt as stated above from the lithium ion battery scrap discarded in large quantities, with a relatively lower cost for recycling.

In order to treat the lithium ion battery scrap for recovering valuable metals, for example, powdered or particulate lithium ion battery scrap obtained via steps of calcining, crushing, sieving and the like as required are first acid-leached using hydrogen peroxide water, and lithium, nickel, cobalt, manganese, iron, copper, aluminum, and the like that can be contained therein are then dissolved in a solution to provide a leached solution.

Subsequently, the leached solution is subjected to a solvent extraction method to sequentially separate the respective metal elements. Here, each valuable metal can be recovered by first recovering iron and aluminum, then manganese and copper, then cobalt, then nickel, and finally leaving lithium in the aqueous phase.

In addition, as methods for recovering valuable metals from secondary batteries such as lithium ion batteries, Patent Documents 1 and 2 disclose "a method for recovering valuable metals from Co, Ni, Mn-containing lithium battery residue" and "a method for recovering a metal from a discarded battery", respectively.

Scientific Publication 1 in the Asian Journal of Chemistry describes the results of the investigation of the possibilities to leach cobalt from spent lithium ion batteries by electrochemistry technique. The experiments show that ferrous ions can improve cobalt leaching.

Patent Document 3 presents an invention that relates to recovery of cobalt and manganese from waste battery materials, and a method for making liquid catalysts from recovered Co-Mn-Br (CMB).

### CITATION LIST

[Patent Document 1] Japanese Patent Application Public Disclosure (KOKAI) No. 2009-193778 A1
[Patent Document 2] Japanese Patent Application Public Disclosure (KOKAI) No. 2005-149889 A1
[Patent Document 3] Japanese Patent Application JP-A-2013512345
[Scientific Publication 1] Guisheng Zeng et al., "Innovative Electrochemistry Technique for Leaching Cobalt from Spent Lithium Ion Batteries", Asian Journal of Chemistry 1, January 2014, XP055469600, can be retrieved via: http://www.asianjournalofchemistry.co.in/user/journal/viewarticle.aspx?Articlel D=26_5_33

### SUMMARY OF INVENTION

### Problem to be Solved by the Invention

In the treatment methods of the lithium ion battery scrap as stated above, the addition of hydrogen peroxide water as a reducing agent is required for acid-leaching nickel and/or cobalt contained in the lithium ion battery scrap, in order to improve recovery rates of metals to be recovered such as lithium, nickel and cobalt. In particular, since a positive electrode active material that may be contained in the lithium ion battery scrap is in the form of oxide of lithium and the like, a large amount of hydrogen peroxide water as the reducing agent will be also required in order to sufficiently leach the positive electrode active material.

Therefore, since the hydrogen peroxide water is relatively expensive, the above treatment methods have had a problem that the treatment costs are greatly increased due to the addition of a large amount of hydrogen peroxide water.

Further, metals other than the expensive metals, such as manganese contained in the leached solution in the above treatment methods can be recovered by the solvent extraction method in a subsequent step, as described above. However, in this case, there are problems that man-hours for extracting the metals by the solvent are increased so that costs are increased, as well as depending on the form of the metal to be recovered after the solvent extraction, it cannot be reused as it is, so that further treatment is required.

An object of the present invention is to solve such problems of the prior arts, and to provide a method for leaching lithium ion battery scrap and a method for recovering metals from the lithium ion battery scrap, which can decrease an amount of expensive hydrogen peroxide water to be added for leaching the lithium ion battery scrap, or eliminate the addition of hydrogen peroxide water, and can easily recover the metals other than valuable metals to effectively reduce treatment costs.

### Means for Solving the Problem

The present inventors have focused on the point where the lithium ion battery scrap to be leached in the acidic solution originally contains manganese together with nickel and/or cobalt to be leached, and found that in leaching the scrap in the acidic solution, manganese are first leached when adding the scrap to the acidic solution, and metal ions of manganese that will be accordingly present in the acidic solution are capable of efficiently promoting the leaching of nickel and/or cobalt.

Further, the present inventors have found that when leaching the scrap in the acidic solution, a part of manganese contained therein is first dissolved and then precipitated, and can be recovered from the leached solution by solid-liquid separation or the like.

The present inventors have considered that by utilizing these findings, the hydrogen peroxide water which was conventionally required to be added in a large amount can be reduced or eliminated, thereby reducing treatment costs.

Based on such findings, the present invention provides a method for leaching lithium ion battery scrap as defined in claim 1.

### Effects of the Invention

According to the present invention, it is possible to effectively facilitate the leaching of nickel and/or cobalt, because manganese is first leached to allow manganese to be present in the acidic solution, so that nickel and/ or cobalt are brought into contact with the metal ions of manganese.

Further, by bring nickel and/or cobalt into contact with manganese in the acidic solution, manganese is deposited/precipitated as oxide, so that manganese can be easily recovered from the leached solution.

Consequently, according to the present invention, it is possible to effectively reduce costs required for treating the lithium ion battery scrap, as compared with the conventional methods.

### BRIEF DESCRIPTION OF DRAWINGS

Fig. 1 is a process drawing schematically showing a method for recovering metals from lithium ion battery scrap according to one embodiment of the present invention.
Fig. 2 is a process drawing schematically showing a method for recovering metals from lithium ion battery scrap according to other embodiment.
Fig. 3 is a graph showing a change in a leaching rate of each element over time in Inventive Example 1 of Test Example 1.
Fig. 4 is a graph showing a change in a leaching rate of each element over time in Inventive Example 2 of Test Example 1.
Fig. 5 is a graph showing a change in a leaching rate of each element over time in Inventive Example 3 of Test Example 2.
Fig. 6 is a graph showing a change in a leaching rate of each element over time in Inventive Example 4 of Test Example 2.
Fig. 7 is a graph showing a change in a leaching rate of each element over time in Inventive Example 5 of Test Example 2.
Fig. 8 is a graph showing a change in a leaching rate of each element over time in Inventive Example 6 of Test Example 2.
Fig. 9 is a graph showing a change in a leaching rate of each element over time in Inventive Example 7 of Test Example 2.
Fig. 10 is a graph showing a change in a leaching rate of each element over time according to a treatment method in Inventive Example 8 of Test Example 3.
Fig. 11 is a graph showing a change in a leaching rate of each element over time according to a treatment method in Inventive Example 9 of Test Example 3.

### MODES FOR CARRYING OUT THE INVENTION

Hereinafter, embodiments of the present invention will be described in detail.

One embodiment of the method for leaching the lithium ion battery scrap according to the present invention relates to a method for leaching lithium ion battery scrap comprising leaching the scrap of the lithium ion battery containing at least one metal of nickel and/or cobalt and at least manganese in an acidic solution, the method comprising a metal leaching step of leaching nickel and/or cobalt by adding the scrap to the acidic solution, so that manganese is first leached to allow metal ions of manganese to be present in the acidic solution, and then contacting nickel and/or cobalt with the metal ions of manganese in the acidic solution containing the metal ions of manganese and/or iron.

### (Lithium Ion Battery Scrap)

The lithium ion battery scrap that can be used in the present invention may be so-called battery slags, positive electrode materials or positive electrode active materials with aluminum foil or at least one of these, which were discarded due to lifetimes of battery products, manufacturing defects or other reasons, or those resulting from optional calcination, chemical treatment, crushing and/or sieving of the battery slags and the like, as stated below. However, such calcination, chemical treatment, crushing or sieving may not be required depending on a type of lithium ion battery scrap and the like.

Here, for example when the lithium ion battery scrap is the battery slag, the lithium ion battery scrap may generally contain single metal oxides consisting of one or more elements selected from the group consisting of lithium, nickel, cobalt, and manganese which form the positive electrode active material, or composite metal oxides consisting of two or more of the elements, as well as aluminum, copper, iron, and the like. Alternatively, when the scrap is the positive electrode active material, the lithium ion battery scrap may generally contain the above single metal oxides or composite metal oxides. Further, when the scrap is the positive electrode material with aluminum foil, aluminum may be further contained in addition to the single metal oxides or composite metal oxides.

### (Calcination Step)

The above lithium ion battery scrap may be optionally calcined by an already known method. This will allow unnecessary substances contained in the lithium ion battery scrap to decompose, burn or volatilize. A heating furnace that can be used for performing calcination includes a fixed bed furnace, an electric furnace, a heavy oil furnace, a kiln furnace, a stoker furnace, a fluidized bed furnace and the like.

In addition, it is possible to apply required chemical treatments together with such calcination, and adjust the lithium ion battery scrap to an appropriate size by crushing it using a single-axial crusher, a twin-screw crusher or the like, and then carry out a sieving step as follows.

### (Sieving Step)

In the sieving step, the lithium ion battery scrap crushed as described above can be sieved to remove some of aluminum and the like. For effective sieving, the lithium ion battery scrap has been preferably subjected to the heat treatment or chemical treatment as stated above, in advance.

Although such sieving is not essential, when sieving is not carried out, an amount of a reagent used in acid leaching and neutralization in a leaching step described below may increase.

### (Metal Leaching Step)

In the metal leaching step, the powdered or particulate lithium ion battery scrap obtained as described above are added to the acidic solution such as sulfuric acid, and leached out.

In this embodiment, the scrap contains nickel and/or cobalt to be leached, and manganese. Once such scrap is added to the acidic solution, manganese contained in the scrap is first dissolved in the acidic solution.

As a result, the metal ions of manganese will be present in the acidic solution.

The above metal ions of manganese will be then brought into contact with nickel and/or cobalt in the acidic solution, thereby facilitating the leaching of nickel and/or cobalt on the basis of an oxidation-reduction reaction of nickel and/or cobalt with the metal ions of manganese.

Consequently, the addition of a large amount of hydrogen peroxide water to the acidic solution is not required, so that the amount of expensive hydrogen peroxide water required for leaching can be decreased or eliminated and treatment costs can be effectively reduced.

Here, the metal to be leached may be at least one metal selected from the group consisting of lithium, nickel and cobalt.

In order to effectively promote the leaching of these metals in the acidic solution, the scrap should contain at least manganese.

Manganese contained in the scrap has a lower oxidation-reduction equilibrium potential of the oxidation-reduction reaction, as compared with the oxidation-reduction equilibrium potential of nickel and/or cobalt. This will effectively promote the oxidation-reduction reaction of the metal ions of manganese with nickel and/or cobalt, so that nickel and/or cobalt can be more efficiently leached.

Further, manganese herein is ametal that can have different oxidation numbers, and hence they tend to reduce nickel and/or cobalt to dissolve them, as well as oxidize themselves and precipitate as oxides.

In the metal leaching step, at least one of the simple substances of the metals of the same elements as manganese, the compounds of the metals of the same elements and the solution containing the metal ions of the metals of the same elements is preferably added together with the scrap to the acidic solution, in terms of further promoting the leaching of nickel and/or cobalt.

In this case, the simple substances of the metals of the same elements as manganese and the compounds of the metals of the same elements are dissolved in the acidic solution, and the solution containing the metal ions of manganese is maintained in its state, so that the amounts of metal ions of manganese in the acidic solution are increased. Thus, in this case, their forms of the metals of the same elements as manganese before addition are not particularly limited, as long as the amounts of metal ions of manganese are increased in the acidic solution after addition.

In this case, the compounds of the same elements as manganese may be chlorides, sulfides, hydroxides or carbonates of manganese, as stated above.

Because of implementation of the above metal leaching step, only a small amount of or no nickel and/or cobalt will be contained in the leached solution obtained in the metal leaching step when recovering nickel and/or cobalt after the metal leaching step as in a recovery method described below, so that it is also possible to reduce the labor and cost required for separating manganese when recovering nickel and/or cobalt.

For example, in the metal leaching step, manganese is precipitated as manganese dioxide in the acidic solution and this substance can be recovered.

By the way, the raw material of the positive electrode active material for the lithium ion battery (so-called positive electrode material precursor, etc.) contains, for example, compounds of lithium, cobalt, nickel and/or manganese, and it may also contain compounds such as, for example, chlorides, sulfides, hydroxides or carbonates of manganese and/ iron.

Such a case where the raw material of the positive electrode active material contains the compounds of manganese is suitable because the leaching of nickel and/or cobalt can be effectively promoted under the oxidation-reduction reaction as stated above by adding the raw material of the positive electrode active material together with the scrap to the acidic solution in the metal leaching step. The raw material of the positive electrode active material to be added to the acidic solution may more preferably contain manganese (II) carbonate, among the manganese compounds.

In addition, such a raw material of the positive electrode active material can be obtained as process scrap in the manufacturing process of the positive electrode active material, for example.

If only this raw material of the positive electrode active material is subjected to the acid leaching, cobalt, nickel, manganese, lithium and the like which can be contained therein will be easily dissolved, and the precipitation reaction of dissolved manganese will not sufficiently occur, and it is necessary to treat a large amount of manganese ion in the subsequent step.

In contrast, when the raw material of the positive electrode active material is mixed with the scrap and then subjected to the acid leaching as described above, the manganese ion dissolved from manganese (II) carbonate or the like that can be contained in the raw material of the positive electrode active material will function as a reducing agent, thereby promoting the leaching of cobalt and nickel in the scrap while the precipitation reaction of dissolved manganese as manganese oxide will proceeds. Therefore, this case can more effectively leach lithium, cobalt, nickel and the like as well as more manganese dioxide and the like can be precipitated, as compared with the case where only the scrap or only the raw material of the positive electrode active material is acid-leached alone.

When adding the manganese in the metal leaching step described above, manganese is preferably added after 0 to 12 hours from the beginning of the leaching of the lithium ion battery scrap in terms of shortening the treatment time for the metal leaching step. Further, the amount of manganese added in the metal leaching step is preferably 0.1 to 5 times the contents of nickel and/or cobalt in the lithium ion battery scrap to be leached. Accordingly, dissolution of nickel and/or cobalt can be effectively promoted and manganese can be sufficiently precipitated.

It should be noted that in order to shorten the treatment time, the leaching time of the lithium ion battery scrap in the metal leaching step is preferably from 1 hour to 24 hours. Examples of the acid used in the metal leaching step may include mineral acids such as sulfuric acid and hydrochloric acid, as well as hydrogen peroxide water, and the like. Further, the acidic solution is preferably stirred under a speed of from 0 rpm to 750 rpm at a temperature of 20°C to 80°C after adding manganese to the acidic solution.

### (Separation and Recovery Step)

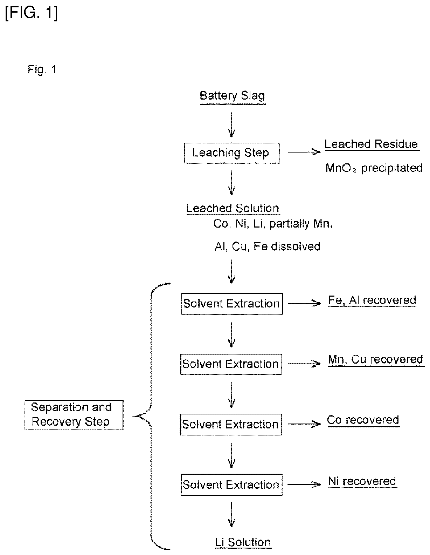

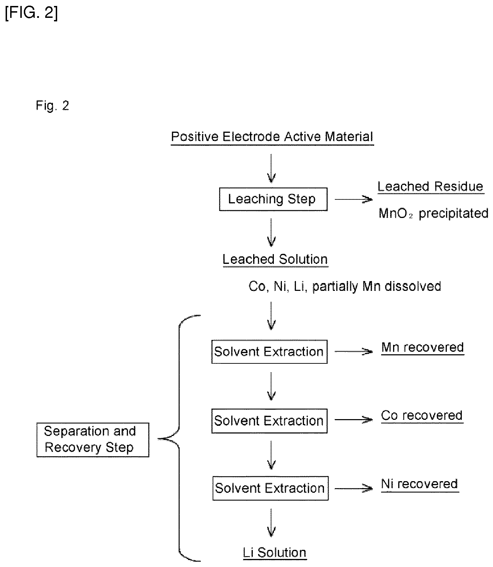

In one embodiment of the method for recovering the metals from the lithium ion battery scrap according to the present invention, a separation and recovery step is conducted after the metal leaching step described above. More particularly, this embodiment can include, for example, the steps illustrated in Fig. 1 or 2, depending on the metal elements contained in the lithium ion battery scrap.

In the separation and recovery step, the leached solution obtained in the metal leaching step is subjected to, for example, a common solvent extraction method or electrolytic method or the like, to recover each element including nickel and/or cobalt dissolved therein, as well as to separate and recover manganese from nickel and/or cobalt when manganese remain in their dissolved forms in the leached solution.

As shown in Fig. 1, iron and aluminum are first extracted by the solvent, among lithium, nickel, cobalt, manganese, aluminum, copper, iron and the like that are contained in the target lithium ion battery scrap and dissolved in the leached solution.

Manganese and copper are then recovered from the solution thus obtained. However, in this case, the amount of manganese contained in the solution is decreased due to the promoting of the precipitation reaction of manganese dioxide in the leaching step, as described above. Depending on the conditions, manganese may not be contained in the solution, and in this case, any recovery of manganese is not required. As a result, any cost required for recovering manganese herein can be effectively reduced or eliminated.

Subsequently, each metal can be recovered by sequentially recovering each of cobalt and nickel and finally leaving lithium in the solution.

On the other hand, the process as shown in FIG. 2 can be more easily carried out than the process as shown in Fig. 1 by sequentially recovering manganese, cobalt and nickel from the leached solution to provide a solution in which only lithium remains, because the elements contained in the lithium ion battery scrap are only lithium, nickel, cobalt, and manganese.

Here, such a separation and recovery step can provide an acidic solution obtained by reverse extraction from the solvent containing manganese, and this acidic solution containing manganese can be preferably used by adding it as the solution containing the metal ions of manganese to the acidic solution in the metal leaching step described above. This can contribute to the reduction of treatment cost due to the decrease in the amount of hydrogen peroxide water or the elimination of hydrogen peroxide water to be added in the metal leaching step.

This acidic solution may be preferably a solution of a sulfate, a solution of a hydrochloride or a solution of a nitrate, and more preferably a solution of manganese (II) sulfate.

In addition, the solution of manganese (II) sulfate generally cannot be used as it is when it is separately recycled, and requires further treatments and increases costs and man-hours, so that it is effective to use this solution in this metal leaching step. Manganese (II) sulfate added to the acidic solution in the metal leaching step serves as a reducing agent and can effectively promote the leaching of nickel and/or cobalt.

When the above acidic solution is added as the solution containing the metal ions of manganese in the metal leaching step, the concentration of manganese in the acidic solution is preferably from 1 g/L to 50 g/L.

Alternatively, compounds of manganese produced by subjecting the above acidic solution to a treatment such as carbonation, hydroxylation, crystallization and the like can be effectively used by adding them to the acidic solution in the metal leaching step. Examples of the compounds of manganese thus produced include carbonates, hydroxides or sulfates or like of manganese, among which manganese (II) carbonate is most suitable for use as an additive in the metal leaching step.

### EXAM PLES

The methods for leaching the lithium ion battery scrap according to the present invention were experimentally carried out and their effects were confirmed. Results will be described below. However, the descriptions provided herein are merely for the purpose of illustration, and are not intended to be limited thereto. In the Test Examples 1, 2, and 3 detailed below, Inventive Examples 2, 6, 7 and 9 do not fall under the invention defined by claim 1 and therefore are regarded as reference examples.

### (Test Example 1)

Lithium ion battery scrap containing manganese, cobalt, nickel and lithium in each content shown in Table 1 was leached by adding it to an acidic solution.

Here, Inventive Example 1 used 100 mL of a solution of manganese (II) sulfate treated by the method according to the present invention and recovered in the separation and recovery step. The concentration of manganese in the solution of manganese (II) sulfate was 13.1 g/L. On the other hand, Inventive Example 2 used 100 mL of pure water in the leaching step, in place of manganese (II) sulfate.

In both of Inventive Examples 1 and 2, the mass of lithium ion battery scrap as a raw material was 10 g, and in the leaching step, one equivalent of sulfuric acid per the solution of manganese (II) sulfate or pure water was used and stirring was performed at a speed of 250 rpm and a leaching temperature of 60 °C. In Inventive Examples 1 and 2, no hydrogen peroxide water was used.

**[Table 1]**

| | Mn (mass%) | Co (mass%) | Ni (mass%) | Li (mass%) |
|---|---|---|---|---|
| Inventive Examples 1 and 2 | 18.2 | 19.9 | 20 | 7.2 |

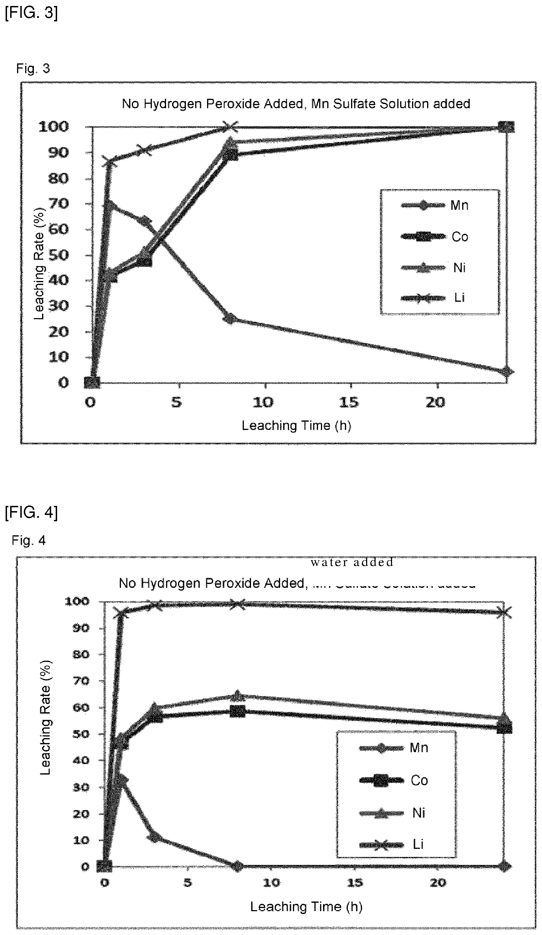

Then, in each of Inventive Examples 1 and 2, the concentration of each element in the solution after a certain period of time in the leaching step was measured by an ICP emission spectroscopic analysis, and a change in a leaching rate of each element over time was calculated. The results are graphically shown in Figs. 3 and 4, respectively.

As can be seen from the results shown in Figs. 3 and 4, Inventive Example 1 in which the solution of manganese (II) sulfate was added significantly increased the leaching rates of nickel and cobalt from the beginning of the leaching and leached substantially all of nickel, cobalt and lithium at the end of the leaching, as compared with Inventive Example 2 in which manganese (II) sulfate was not added.

### (Test Example 2)

In Inventive Examples 3 to 5, a positive electrode active material was mixed with a positive electrode material precursor to provide a mixture containing manganese, cobalt, nickel and lithium at the contents shown in Table 2, according to the method of the present invention.

On the other hand, in Inventive Example 6, the positive electrode active material was added alone, and in Inventive Example 7, the positive electrode material precursor was added alone. In Inventive Examples 3 to 5, the composition of the positive electrode material precursor mixed with the positive electrode active material was the same as that of Inventive Example 7 in which the positive electrode material precursor was added alone.

For each of Inventive Examples 3 to 7, 10 g of the mixture, the positive electrode active material or the positive electrode material precursor was acid-leached with 100 mL of pure water and one equivalent of sulfuric acid, and stirring was performed at a leaching temperature of 60 °C and a speed of 250 rpm. In each of Inventive Examples 3 to 7, no hydrogen peroxide solution was used.

**[Table 2]**

| | Positive Electrode Active Material: precursor (Mass Ratio) | Mn (mass%) | Co (mass%) | Ni (mass%) | Li (mass%) |
|---|---|---|---|---|---|
| Inventive Example 3 | 2:8 | 16.8 | 16.3 | 16.5 | 5.5 |
| Inventive Example 4 | 3:7 | 17 | 16.7 | 16.9 | 5.7 |
| Inventive Example 5 | 4:6 | 17.1 | 17.2 | 17.3 | 5.9 |
| Inventive Example 6 | 10:0 (Positive Electrode Active Material Alone) | 18.2 | 19.9 | 20 | 7.2 |
| Inventive Example 7 | 0:10 (Precursor Alone) | 16.4 | 15.4 | 15.6 | 5.1 |

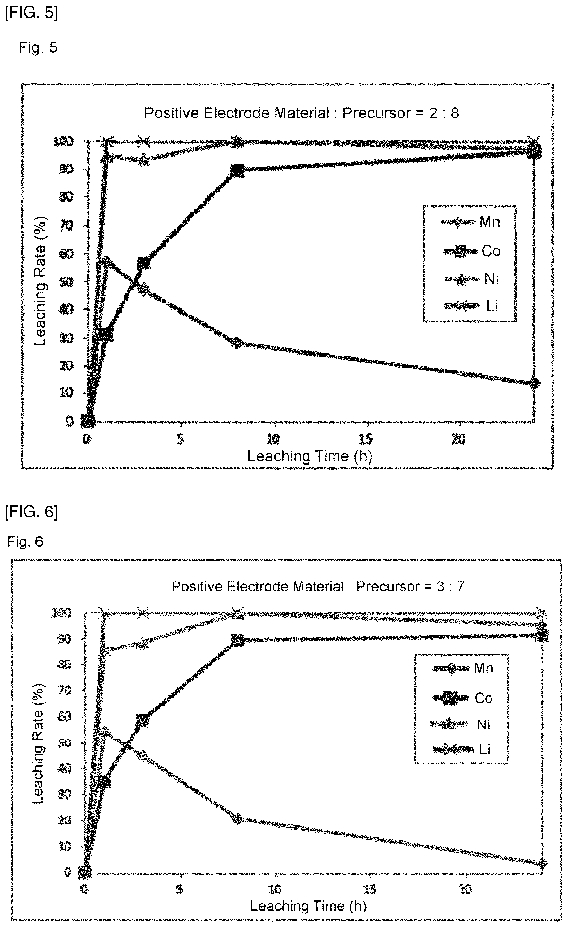

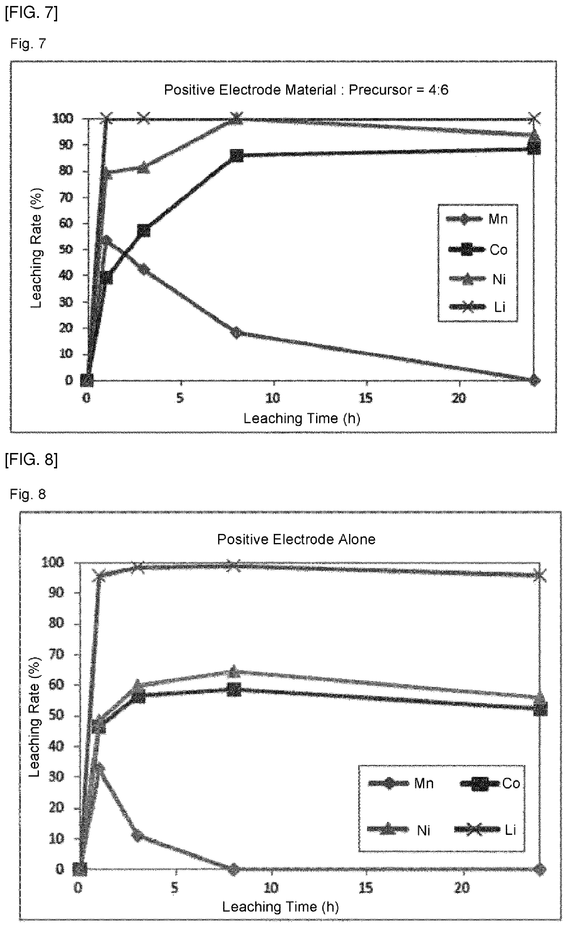

Then, in each of Inventive Examples 3 to 7, a concentration of each element in the solution after a certain period of time in the leaching step was measured by an ICP emission spectroscopic analysis, and a change in a leaching rate of each element over time was calculated. The results are graphically shown in Figs. 5 to 9, respectively.

As can be seen from the results shown in Figs. 5 to 9, Inventive Examples 3 to 5 in which the positive electrode active material and the positive electrode material precursor were mixed and acid-leached significantly increased the leaching rates of nickel and cobalt from the beginning of the leaching and leached substantially all of nickel, cobalt and lithium at the end of the leaching, even though hydrogen peroxide water was not added, as compared with Inventive Examples 6 and 7 in which only the positive electrode active material or only the positive electrode material precursor was acid-leached.

Also, as can be seen from the results, Inventive Example 7 in which only the positive electrode material precursor was acid-leached did not decrease the leaching rate of manganese so much during the leaching and did not sufficiently precipitate manganese dioxide, whereas Inventive Examples 3 to 5 promoted the precipitation reaction of manganese dioxide and significantly decreased the leaching rate of manganese.

### (Test Example 3)

In Inventive Examples 8 and 9, a positive electrode active material containing manganese, cobalt, nickel and lithium at the contents shown in Table 3 was used. In Inventive Example 8, this positive electrode active material was mixed with a substance mainly composed of manganese (II) carbonate as shown in Table 4 and acid-leached. On the other hand, in Inventive Example 9, the acid leaching of the positive electrode active material was carried out without being mixed with manganese (II) carbonate.

In both of Inventive Examples 8 and 9, the mass of the positive electrode active material as a raw material was 10 g, and in the leaching step, 100 mL of pure water and one equivalent of sulfuric acid per pure water were used without employing hydrogen peroxide water, and stirring was performed at a speed of 250 rpm and a leaching temperature of 60 °C. The mass of manganese (II) carbonate mixed with the positive electrode material in Inventive Example 8 was 2.57 g.

**[Table 3]**

| | Mn (mass%) | Co (mass%) | Ni (mass%) | Li (mass%) |
|---|---|---|---|---|
| Inventive Examples 8 and 9 | 18.2 | 19.9 | 20 | 7.2 |

**[Table 4]**

| | Mn (mass%) | Co (mass%) | Ni (mass%) | Li (mass%) | Na (mass%) |
|---|---|---|---|---|---|
| Manganese (II) carbonate | 42.5 | > 0.1 | > 0.1 | > 0.1 | 3.4 |

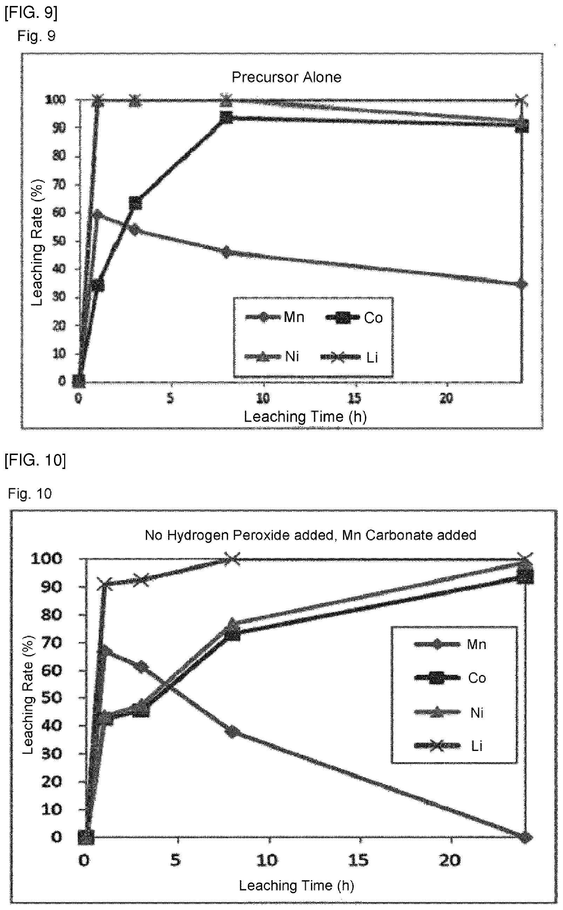

Then, in each of Inventive Examples 8 to 9, a concentration of each element in the solution after a certain period of time in the leaching step was measured by an ICP emission spectroscopic analysis, and a change in a leaching rate of each element over time was calculated. The results are graphically shown in Figs. 10 to 11, respectively.

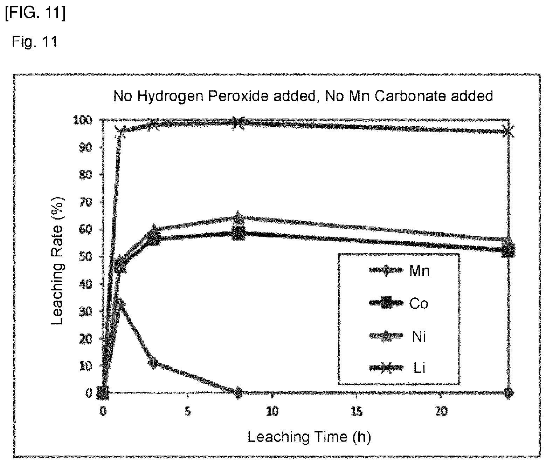

As can be seen from the results of Figs. 10 and 11, Inventive Example 9 in which only the positive electrode active material was acid-leached did not increase the leaching rates of cobalt and nickel, whereas Inventive Example 8 in which manganese (II) carbonate was mixed with the positive electrode active material significantly increased the leaching rates of cobalt and nickel.

## Claims

1. A method for leaching lithium ion battery scrap comprising leaching the scrap of the lithium ion battery containing nickel and/or cobalt and manganese in an acidic solution, the method comprising a metal leaching step of leaching nickel and/or cobalt by adding the scrap to the acidic solution, so that manganese is first leached to allow manganese ions to be present in the acidic solution, and then contacting nickel and/or cobalt with the manganese ions in the acidic solution containing the manganese ions,
wherein in the metal leaching step, nickel and/or cobalt is leached based on an oxidation-reduction reaction of nickel and/or cobalt with the manganese ions,
wherein, in the metal leaching step, after manganese is leached, the manganese ions are precipitated as oxides by oxidation, and
wherein at least one of simple substances of manganese, manganese compounds, and a solution containing manganese ions is added together with the scrap to the acidic solution in the metal leaching step.

2. The method for leaching lithium ion battery scrap according to claim 1, wherein, in the metal leaching step, a raw material of a positive electrode active material for the lithium ion battery is added together with the scrap to the acidic solution, and wherein the raw material of the positive electrode active material for the lithium ion battery is obtained as process scrap in the manufacturing process of a positive electrode active material and contains manganese compounds.

3. A method for recovering metals from lithium ion battery scrap, comprising the metal leaching step in the method for leaching lithium ion battery scrap according to claim 1 or 2, and a separation and recovery step of separating manganese leached in a leached solution obtained in the metal leaching step from nickel and/or cobalt by solvent extraction and recovering manganese from the leached solution.

4. The method for recovering the metals from the lithium ion battery scrap according to claim 3,
wherein the manganese compounds, and/or the solution containing manganese ions are added together with the scrap to the acidic solution in the metal leaching step, and
wherein the solution containing manganese ions is an acidic solution resulting from inverse extraction of the solvent containing manganese in the separation and recovery step, and the manganese compounds are manganese compounds produced from the acidic solution resulting from the inverse extraction.

## Patentansprüche

1. Ein Verfahren zum Auslaugen von Lithium-Ionen-Batterieschrott, welches das Auslaugen des Nickel und/oder Kobalt und Mangan enthaltenden Schrotts der Lithium-Ionen-Batterie in einer sauren Lösung umfasst, wobei das Verfahren einen Metallauslaugungsschritt des Auslaugens von Nickel und/oder Kobalt durch Zugeben des Schrotts zu der sauren Lösung aufweist, so dass zuerst Mangan ausgelaugt wird, um in der sauren Lösung Mangan-Ionen freizusetzen, und dann das Inkontaktbringen von Nickel und/oder Kobalt mit den in der sauren Lösung enthaltenen Mangan-Ionen,
wobei in dem Metallauslaugungsschritt auf der Grundlage einer Redox-Reaktion von Nickel und/oder Kobalt mit den Mangan-Ionen Nickel und/oder Kobalt ausgelaugt wird,
wobei in dem Metallauslaugungsschritt nach dem Auslaugen von Mangan die Mangan-Ionen durch Oxidation als Oxide ausgefällt werden, und
wobei in dem Metallauslaugungsschritt einfache Mangansubstanzen und/oder Manganverbindungen und/oder eine Mangan-Ionen-haltige Lösung zusammen mit dem Schrott der sauren Lösung zugegeben wird.

2. Das Verfahren zum Auslaugen von Lithium-Ionen-Batterieschrott nach Anspruch 1, wobei, in dem Metallauslaugungsschritt ein Rohmaterial eines aktiven Materials einer positiven Elektrode für die Lithium-Ionen-Batterie zusammen mit dem Schrott der sauren Lösung zugegeben wird, und wobei das Rohmaterial des aktiven Materials der positiven Elektrode für die Lithium-Ionen-Batterie im Herstellungsprozess eines aktiven Materials der positiven Elektrode als Prozessabfall erhalten wird und Manganverbindungen enthält.

3. Ein Verfahren zur Rückgewinnung von Metallen aus Lithium-Ionen-Batterieschrott, aufweisend den Metallauslaugungsschritt in dem Verfahren zum Auslaugen von Lithium-Ionen-Batterieschrott gemäß Anspruch 1 oder 2 sowie einen Trennungs- und Rückgewinnungsschritt, bei dem in einer in dem Metallauslaugungsschritt erhaltenen ausgelaugten Lösung ausgelaugtes Mangan durch Lösungsmittelextraktion von Nickel und/oder Kobalt getrennt und aus der ausgelaugten Lösung zurückgewonnen wird.

4. Das Verfahren zur Rückgewinnung der Metalle aus dem Lithium-Ionen-Batterieschrott nach Anspruch 3,
wobei in dem Metallauslaugungsschritt die Manganverbindungen und/oder die Mangan-Ionen-haltige Lösung zusammen mit dem Schrott der sauren Lösung zugegeben werden, und
wobei die Mangan-Ionen-haltige Lösung eine saure Lösung darstellt, welche aus der inversen Extraktion des manganhaltigen Lösungsmittels im Trennungs- und Rückgewinnungsschritt resultiert, und die Manganverbindungen Manganverbindungen darstellen, welche aus der sauren Lösung hergestellt werden, die aus der inversen Extraktion resultiert.

## Revendications

1. Procédé de lixiviation de fragments de batterie lithium-ion comprenant la lixiviation des fragments de batterie lithium-ion contenant du nickel et/ou du cobalt et du manganèse dans une solution acide, le procédé comprenant une étape de lixiviation de métal destinée à lixivier du nickel et/ou du cobalt en ajoutant les fragments à la solution acide, de telle sorte que le manganèse est lixivié en premier afin de permettre la présence d'ions manganèse dans la solution acide, et ensuite, de mise en contact du nickel et/ou du cobalt avec les ions manganèse dans la solution acide contenant des ions manganèse,
dans lequel, dans l'étape de lixiviation de métal, du nickel et/ou du cobalt sont lixiviés sur la base d'une réaction d'oxydoréduction de nickel et/ou de cobalt avec les ions manganèse,
dans lequel, dans l'étape de lixiviation de métal, après que le manganèse a été lixivié, les ions manganèse sont précipités sous forme d'oxydes par oxydation, et
dans lequel au moins un composé parmi des substances simples de manganèse, des composés de manganèse et une solution contenant des ions manganèse est ajouté, simultanément avec les fragments, à la solution acide dans l'étape de lixiviation de métal.

2. Procédé de lixiviation de fragments de batterie lithium-ion selon la revendication 1, dans lequel, dans l'étape de lixiviation de métal, une matière première d'un matériau actif d'électrode positive de batterie lithium-ion est ajoutée simultanément avec les fragments à la solution acide et dans lequel la matière première du matériau actif d'électrode positive de la batterie lithium-ion est obtenue sous la forme de fragments de processus dans le processus de fabrication d'un matériau actif d'électrode positive et contient des composés de manganèse.

3. Procédé de récupération de métaux à partir de fragments de batterie lithium-ion, comprenant l'étape de lixiviation de métal dans le procédé de lixiviation de fragments de batterie lithium-ion selon la revendication 1 ou 2, et une étape de séparation et de récupération destinée à séparer le manganèse lixivié dans une solution lixiviée obtenue dans l'étape de lixiviation de métal à partir du nickel et/ou du cobalt par extraction par solvant et à récupérer le manganèse à partir de la solution lixiviée.

4. Procédé de récupération de métaux à partir de fragments de batterie lithium-ion selon la revendication 3,
dans lequel les composés de manganèse et/ou la solution contenant des ions manganèse sont ajoutés simultanément avec les fragments à la solution acide dans l'étape de lixiviation de métal, et
dans lequel la solution contenant des ions manganèse est une solution acide résultant de l'extraction inverse du solvant contenant du manganèse dans l'étape de séparation et de récupération, et les composés de manganèse sont les composés de manganèse produits à partir de la solution acide résultant de l'extraction inverse.
